Europäisches Patentamt

European Patent Office

Office européen des brevets

(19)

(11) Publication number: **0 034 451**
A2

(12)

# EUROPEAN PATENT APPLICATION

(21) Application number: **81300519.6**

(22) Date of filing: **09.02.81**

(51) Int. Cl.³: **B 60 T 8/093**
**B 60 T 8/087**

(30) Priority: **16.02.80 GB 8005332**

(43) Date of publication of application:
**26.08.81 Bulletin 81/34**

(84) Designated Contracting States:
**DE FR**

(71) Applicant: **LUCAS INDUSTRIES LIMITED**
**Great King Street**
**Birmingham, B19 2XF(GB)**

(72) Inventor: **Farr, Glyn Phillip Reginald**
**21 The Hamlet**
**Leek Wootton Warwickshire(GB)**

(74) Representative: **Spall, Christopher John et al,**
**BARKER, BRETTELL & DUNCAN 138 Hagley Road**
**Edgbaston Birmingham B16 9PW(GB)**

(54) Improvements in flywheel mechanisms for fluid-pressure operated anti-skid braking systems.

(57) In an anti-skid braking system, a flywheel mechanism (3) comprises a flywheel (6) rotatably mounted on a shaft (2) driven from a braked wheel for axial movement relative to the shaft (2), a thrust member (8) mounted on, and keyed against rotation and axial movement with respect to, the shaft (2), and a ball and ramp mechanism 11 located between the thrust member (8) and a reaction plate (13) in clutched engagement with the flywheel (16). The ball and ramp mechanism comprises balls (19) located in angularly spaced recesses (16, 17) in adjacent faces of the thrust member (8) and the reaction plate (13). Relative rotation between the thrust member (8) and the reaction plate (13) causes the balls (19) to ride up ramps defined by the sides of the recesses (16, 17) to move the flywheel (6) axially away from the thrust member (8). Upon such movement the flywheel (6) acts on a lever (24) to operate a dump valve (5) for controlling a brake-applying fluid-pressure. An overrun clutch (44) between the flywheel (6) and the reaction plate (13) allows operation of the dump valve (5) to be maintained when the ball and ramp mechanism (11) is fully expanded.

FIG.1.

· 1

IMPROVEMENTS IN FLYWHEEL MECHANISMS FOR

FLUID-PRESSURE OPERATED

ANTI-SKID BRAKING SYSTEMS

This invention relates to flywheel mechanisms for fluid-pressure operated anti-skid braking systems of the kind comprising a flywheel which is rotatably mounted on a shaft adapted to be driven from a braked wheel, a thrust member mounted on, and keyed against rotation with respect to, the shaft, and camming means disposed between the flywheel and the thrust member and through which rotation of the shaft is imparted to the flywheel from the thrust member, the camming means being so constructed and arranged that relative rotation between .the flywheel and the thrust member as a result of excessive deceleration of the shaft is accompanied by relative movement between the flywheel and the thrust member in an axial direction to operate pressure-regulating means for controlling a brake-applying fluid-pressure.

In some known flywheel mechanisms of the kind set forth the flywheel is restrained against axial movement with respect to the shaft, and the thrust member is axially movable with respect to the shaft to operate the pressure regulating means, the thrust member being guided for axial sliding movement on splines on the shaft.

Apart from the fact that such known flywheel mechanisms are expensive to manufacture due to the cost of producing the splines, the reliability of such mechanisms is also in doubt due to the provision of the splines to provide the sliding axial engagement between the thrust member and the shaft. In particular, after an extended period in service and an extended period of non-use of the flywheel mechanism without the thrust member sliding on the shaft, the splines may become fouled with foreign matter, or otherwise damaged. This might either prevent the thrust member from sliding on the shaft to initiate skid control, or more likely and more seriously, cause the thrust member to stick in an axially displaced position in which the pressure-regulating means, suitably a pressure dump valve, are operated to control, and suitably relieve, the brake-applying fluid-pressure thereby causing brake failure.

In another known flywheel mechanism of the kind set forth the camming means comprises a helical cam surface constituted by screw-threaded engagement between the flywheel and the shaft and by means of which the flywheel is mounted on the shaft.

According to our invention in a flywheel mechanism of the kind set forth the thrust member is keyed against rotation and axial movement with respect to the shaft, and the flywheel is mounted on the shaft for relative axial movement and relative rotation with respect to the shaft as dictated by the camming means, the flywheel being adapted to co-operate with the pressure-regulating means, and the camming means being separate from the mounting for the flywheel on the shaft and located between the thrust member and a second member in clutched engagement with the flywheel so that the flywheel can overrun to maintain operation of the pressure-regulating means, when the camming means is fully expanded.

This simplifies the construction and increases reliability since a splined or other screw-threaded connection between the flywheel and the shaft can be avoided, and the combined rotational and axial movement of the flywheel alleviates any tendency for it to stick.

For example, the thrust member may be keyed to the shaft by means of a single key or a radial pin, and the flywheel may be journalled for rotation on a plain or roller bearing on the shaft on which the flywheel is also axially slidable.

Preferably the bearing is directly beneath the mass centre of the flywheel to provide a balanced assembly.

Conveniently the flywheel is urged by a spring towards the thrust member so that the camming means is clamped there between at all times.

The camming means conveniently comprises a ball and ramp mechanism in which balls are located in angularly spaced recesses in adjacent faces of the thrust member and the second member which comprises a reaction plate, relative rotation between the thrust member and the reaction plate at least in one direction causing the balls to ride up ramps defined by the sides of the recesses to cause the flywheel to be urged axially away from the thrust member.

Three embodiments of our invention are illustrated in the accompanying drawings in which:-

Figure 1 is longitudinal section through a flywheel mechanism for a fluid-pressure operated anti-skid braking system;

Figure 2 is a longitudinal section through another flywheel mechanism; and

Figure 3 is a section similar to Figure 2 but showing a modification.

4

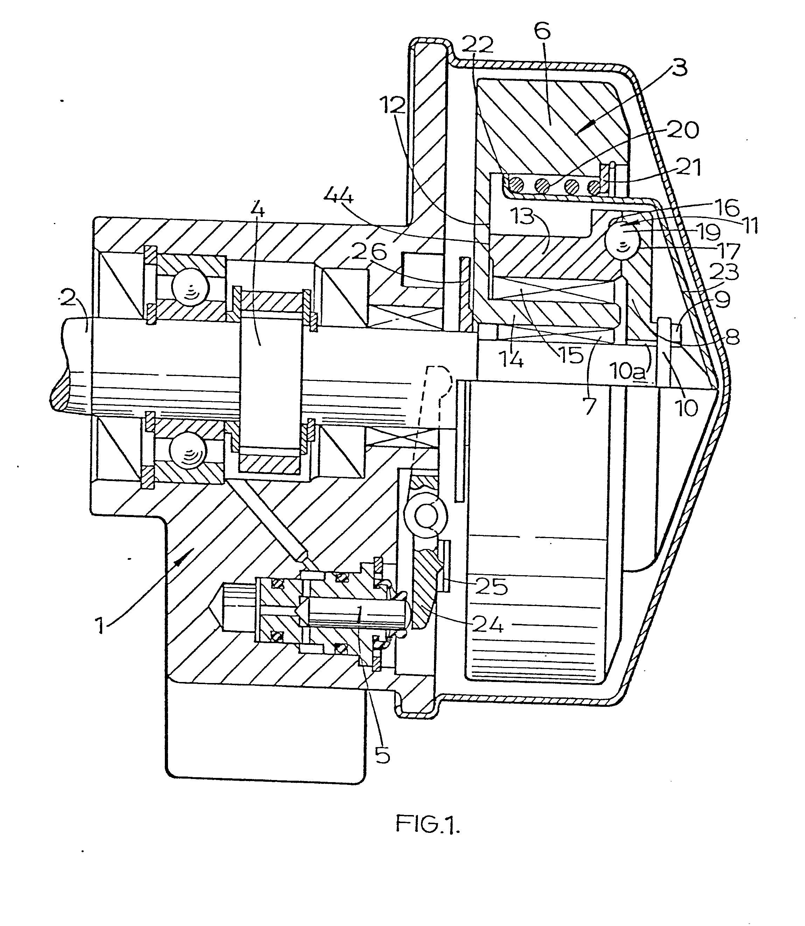

The flywheel mechanism illustrated in Figure 1 of the accompanying drawings comprises a housing 1 from opposite ends of which project opposite ends of a shaft 2. At one end the shaft 2 is coupled to a wheel to be braked and at the opposite end provides a mounting for a flywheel assembly 3. At an intermediate point in its length the shaft 2 is provided with eccentric cam 4 forming the drive mechanism for a pump of a modulator and pump assembly (not shown) for controlling a brake-applying fluid pressure in response to operation of a dump valve 5. The modulator and pump assembly forms the subject of our co-pending G.B. Patent Applications 8005304 and 8005305, and need not be described further herein.

The flywheel assembly 3 comprises a flywheel 6 which is journalled for rotation on a roller bearing 7 on the shaft 2, a radial thrust member 8 in the form of plate which has an outwardly directed axial flange 9 through which the thrust member 8 is keyed against relative rotation and axial movement with respect to the end of the shaft 2 by means of a diametrical pin 10, and a ball and ramp mechanism 11 clamped between the thrust member 8 and plain face 12 at the base of an annular recess in the adjacent end of the flywheel. An annular clearance 10a is provided between the thrust member 8 and the shaft 2 so that the thrust member 8 can move radially through a limited distance to compensate for tolerance variations in the mechanism 11.

The ball and ramp mechanism 11 comprises an annular reaction plate 13 which encircles, and is mounted on, the hub 14 of the flywheel 6 by means of a one-way drive unit 15 of the roller type. The reaction plate 13 engages at one end with the face 12 to form a friction overrun clutch 44 biassed by a compression spring 20, and at the other end has a plain face in which is located a series of angularly spaced recesses 16 corresponding with, and superimposed upon, complementary recesses 17 in the adjacent face of the thrust member 8. Balls 19 are disposed in corresponding pairs of the recesses 16 and 17. The reaction plate 13 is urged towards the thrust member 8 by the compression spring 20 of large diameter which is housed within the recess in the flywheel 6 and acts between a radial abutment 21 adjacent to the outer end of the recess and a radial flange 22 on a dished-shape abutment member 23 which reacts the force in the spring 20 at a single point against the end of the shaft 2 to which the thrust member 8 is keyed.

The dump valve 5 is normally closed and is operated by a lever 24 which is pivotably mounted at an intermediate point in its length on the housing 1. A spring 25 acts on the lever 24 to urge it at its outer end in a direction to hold the dump valve 5 closed, and the inner end of the lever 24 is normally spaced from a plain thrust washer 26 upon which the adjacent inner face of the flywheel 6 acts.

When the wheel is rotating in a "brakes-off" condition, or when the brake is applied normally in a non-skid condition, the thrust member 8 rotates with the shaft 2, and the flywheel 6 is driven with it at the same speed through the ball and ramp mechanism 11, and then to the one-way drive 15 and the overrun clutch 44.

If the deceleration of the wheel is excessive, the speed of rotation of the shaft 2 is reduced suddenly. However, due to its inertia, the flywheel 6 runs on and thus causes relative rotation to take place between the thrust member 8 and the reaction plate 13. The balls 19 ride up ramps comprising end walls of the recesses 16 and 17 so that simultaneously the reaction plate 13 and the flywheel 6 move axially relatively away from the thrust member 8. This moves the lever 24 angularly to permit the dump valve 5 to open and affect relief of the brake-applying fluid pressure as described in our co-pending G.B. Patent Application Nos. 8005304 and 8005305, referred to above.

Once the dump valve 5 has been opened fully, the reaction plate 13 rotates with the thrust member 8 to maintain the ball and ramp mechanism 11 in the expanded condition, but the flywheel 6 is permitted to rotate relative to the reaction plate 13 by slipping the over-run clutch 44 and the one-way drive 15. Thus the flywheel 6 decelerates at a rate determined by the torque sustained by the overrun clutch 44 and the rate of deceleration of the shaft 2.

Following brake release, the wheel will re-accelerate and as the wheel speed again approaches more closely the speed of rotation of the flywheel 6, the flywheel 6 can be moved angularly and axially in the opposite direction by the force in the spring 20, so that the components of the mechanism are returned to the position shown in the drawings, and the brakes can be re-applied.

The wheel may continue to accelerate during an initial period of the brake-application phase and on high μ road surfaces this rate of acceleration could exceed the setting of the clutch 44. The one-way drive 15 ensures that the flywheel 6 is accelerated with the shaft 2 during this period.

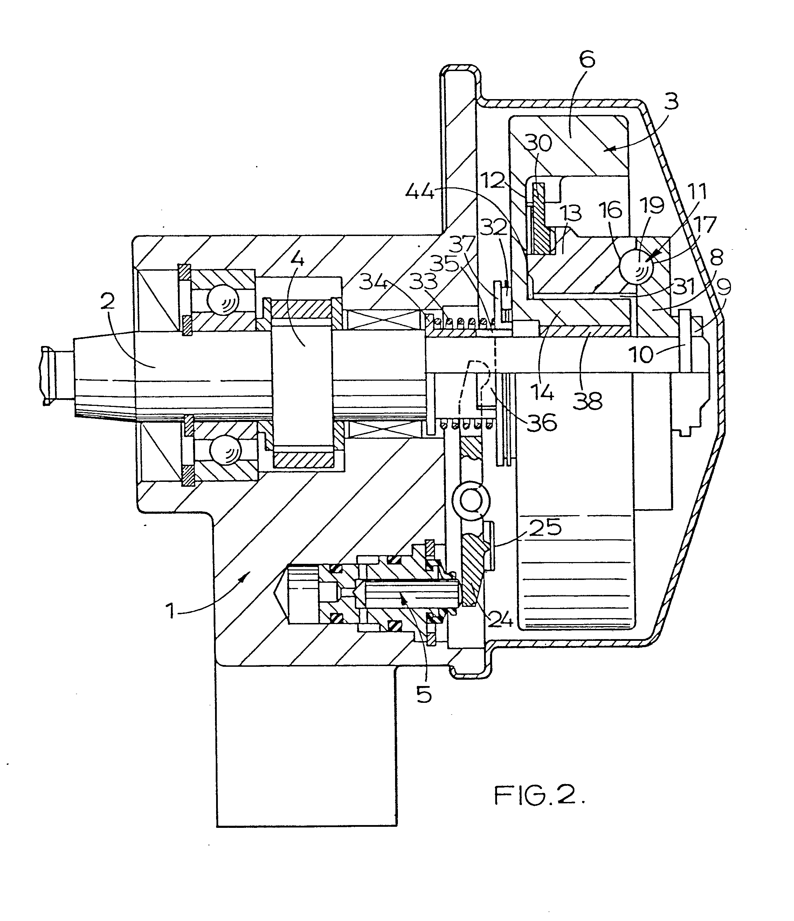

In the construction illustrated in Figure 2 the one-way drive 15 of the roller type is replaced by a pawl and ratchet device 30 of the face type located between the face 12 and the reaction plate 13. An annular clearance 31 is provided between the reaction plate 13 and the hub 14 of the flywheel so that the reaction plate 13 can move radially to compensate for tolerance variations in the ball and ramp mechanism 11, and clearance between the thrust member 8 and the shaft 2 is eliminated.

The thrust washer 26 is replaced by a thrust bearing 32 contained within a cage 37, and a compression spring 33, which replaces the large diameter spring 20, acts between the thrust bearing 32 and a sleeve 34 which is pressed onto the shaft 2 and is slotted at 35 to accept projections 36 on the cage 37 to prevent the cage 37 from rotating. Finally the flywheel 6 rotates on a plain bearing 38 on the shaft 2.

The construction and operation of the embodiment of Figure 2 is otherwise the same as that of Figure 1 and corresponding reference numerals have been applied to corresponding parts.

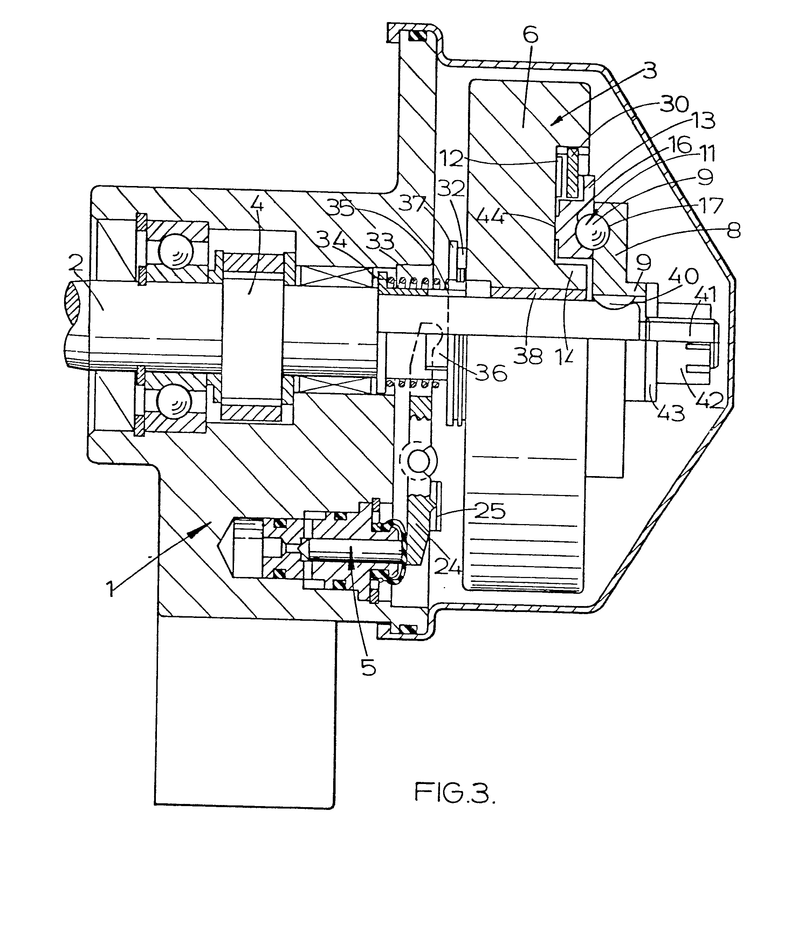

In the modified construction illustrated in Figure 3 the diametrical pin 10 is omitted and the thrust member 8 is keyed to the shaft 2 against rotation by means of a woodruff key 40.

The free end of the shaft 2 has a threaded portion 41 of reduced diameter to receive a castellated nut 42 which clamps a washer 43 against the thrust member 8.

8

The construction and operation of the embodiment of Figure 3 is otherwise the same as Figure 2 and corresponding reference numerals have been applied again to corresponding parts.

In a further modification the sleeve 34 may be omitted and the compression spring 33 may act between the thrust bearing and a suitable abutment face provided in the housing.

In another modification, the one-way drive 15 or the pawl and ratchet device 30 may be omitted, the overrun clutch being relied upon to provide all the torque necessary to drive and accelerate the flywheel. This may be acceptable when the vehicle wheels have a relatively high rotational inertia so that high rates of wheel acceleration are unlikely to be encountered. Alternatively, when the wheel has a low inertia the one-way drive may again be omitted provided the torque setting of the overrun clutch is increased.

0034451

## CLAIMS

1. A flywheel mechanism for a fluid-pressure operated anti-skid braking system comprising a flywheel (6) which is rotatably mounted on a shaft (2) adapted to be driven from a braked wheel, a thrust member (8) mounted on, and keyed against rotation with respect to, the shaft (2), and camming means (11) disposed between the flywheel (6) and the thrust member (8) and through which rotation of the shaft (2) is imparted to the flywheel (6) from the thrust member (8), the camming means (11) being so constructed and arranged that relative rotation between the flywheel (6) and the thrust member (8) as a result of excessive deceleration of the shaft (2) is accompanied by relative movement between the flywheel (6) and the thrust member (8) in an axial direction to operate pressure-regulating means for controlling a brake-applying fluid-pressure, characterised in that the thrust member (8) is keyed against rotation and axial movement with respect to the shaft (2), and the flywheel (6) is mounted on the shaft (2) for relative axial movement and relative rotation with respect to the shaft (2) as dictated by the camming means (11), the flywheel (6) being adapted to co-operate with the pressure-regulating means, and the camming means (11) being separate from the mounting (7) for the flywheel (6) on the shaft (2) and located between the thrust member (8) and a second member (13) in clutched engagement with the flywheel (6) so that the flywheel (6) can overrun to maintain operation of the pressure-regulating means when the camming means (11) is fully expanded.

2. A flywheel mechanism according to Claim 1, characterised in that the thrust member (8) is keyed to the shaft (2) by a single key (40) or a radial pin (10).

3. A flywheel mechanism according to Claim 1 or Claim 2, characterised in that the flywheel (6) is journalled for rotation on a plain bearing (38) or a roller bearing (7) on the shaft (2) on which the flywheel (6) is also axially slidable.

4. A flywheel mechanism according to Claim 3, characterised in that the bearing (38 or 7) is directly beneath the mass centre of the flywheel (6) to provide a balanced assebly.

5 A flywheel mechanism acording to any preceding claim, characterised in that the flywheel (6) is urged by a spring (20 or 33) towards the thrust member (8) so that the camming means (11) is clamped therebetween at all times.

6. A flywheel mechanism according to any preceding claim, characterised in that the camming means (11) comprises a ball and ramp mechanism in which balls (19) are located in angularly spaced recesses (16 and 17) in adjacent faces of the thrust member (8) and the second member (13) which comprises a reaction plate, relative rotation between the thrust member (8) and the reaction plate (13) at least in one direction causing the balls (19) to ride up ramps defined by the sides of the recesses (16 and 17) to cause the flywheel (6) to be urged axially away from the thrust member (8).

7. A flywheel mechanism according to Claim 6, characterised in that the reaction plate (13) is mounted on the hub (14) of the flywheel (6) by means of a one-way drive unit (15) of the roller type, an annular clearance (10a) being provided between the thrust member (8) and the shaft (2) so that the thrust member (8) can move radially through a limited distance to compensate for tolerance variations in the ball and ramp mechanism (11).

8. A flywheel mechanism according to Claim 6, characterised in that the reaction plate (13) is coupled to the flywheel (6) by means of a pawl and ratchet device (30) of the face type, an annular clearance (31) being provided between the reaction plate (13) and the hub (14) of the flywheel (6) so that the reaction plate (13) can move radially through a limited distance to compensate for tolerance variations in the ball and ramp mechanism (11).

9. A flywheel mechanism according to any preceding claim, characterised in that the flywheel (6) acts on the inner end of a lever (24) to operate a dump valve (5) which comprises the pressure-regulating means, the lever (24) being pivotably mounted at an intermediate point in its length, and a spring (25) being provided to act on the lever (24) to urge the outer end of the lever (24) in a direction to close the dump valve (5).

10. A flywheel mechanism according to Claim 9 as appended to Claim 5, characterised in that the flywheel (6) acts on the inner end of the lever (24) through a thrust bearing (32) contained within a cage (37), the spring (20) which urges the flywheel (6) towards the thrust member (8) acting between the thrust bearing (32) and a sleeve (34) which is pressed onto the shaft (2) and is slotted to receive projections (36) on the cage (37) to prevent the cage (37) from rotating.

FIG.1.

FIG.2.

FIG.3.